# EUROPÄISCHE PATENTSCHRIFT

(11) **EP 1 298 066 B1**
(45) Veröffentlichungstag und Bekanntmachung des Hinweises auf die Patenterteilung: **28.09.2005**
(21) Anmeldenummer: 02005478.9
(22) Anmeldetag: 09.03.2002
(51) Int. Cl.: B65D 5/42, G06K 19/077, G06K 19/04

(54) **Produktverpackung aus faltbarem Kartonmaterial mit Informationsystemen auf Datenträgern und Verfahren zu deren Herstellung**
Foldable cardboard product packaging with an informationsystem on data carriers and method of making the same
Emballage en carton pliable avec système d'information sur des supports de données et procédé de fabrication correspondant

(30) Priorität: 22.09.2001 DE 20115621 U
(43) Veröffentlichungstag der Anmeldung: 02.04.2003
(73) Patentinhaber: Wanfried-Druck Kalden GmbH, 37281 Wanfried (DE)
(72) Erfinder: Mann, Wolfgang E., Dipl.-Ing., 37281 Wanfried (DE)
(74) Vertreter: Freiherr von Schorlemer, Reinfried

(56) Entgegenhaltungen:
- DE-A- 10 000 283
- DE-U- 29 917 257
- FR-A- 2 717 593
- US-A- 5 696 363

## Beschreibung

Nach dem Stand der Technik sind Verpackungseinheiten und deren Zuschnitte aus faltbaren Karton- oder Folienmaterial zur Bildung von Produktverpackungen bekannt

Die Nutzung dieser Verpackungsmittel zur Herstellung von Produktverpackungen beschränken sich auf eine umhüllende Sammel- und Schutzfunktion, sowie auf Lager-, Transport- und Dienstleistungsfunktionen mit aufgedruckten Texten oder bildhaften Produktdarstellungen.

Bekannte Produktverpackungen geben dem Verbraucher stumme Informationen in Schrift- und Bildform.

Produktverpackungen für Arzneimittel sind im Öffnungsbereich mit Sicherungsetiketten ausgestattet

Diese geben eine Garantie für die Erstöffnung oder stellen einen Originalitätsnachweis zum Schutz der Verbraucher dar.

Bekannt sind auch Produktverpackungen in Verkaufsstätten mit Sicherungsetiketten gegen Diebstahl als elektronische Artikelsicherung. Diese reagieren auf von aussen einwirkende Frequenzen und lösen akustische oder optische Warnsignale aus.

Es sind auch Produktverpackungen bekannt mit inaktiven Smart Label als speicherprogrammierbare Chips mit Antenne. Es werden mittels Scanner, Handlesegeräten oder Laptop-Computer vorprogrammierte Daten abgerufen, oder es können solche gespeichert werden. (z. B. DE 299 17 257 U, FR-A-2 717 593).

Solche in Produktverpackungen verwendete Systeme werden als intelligente, kommutative Systeme bezeichnet.

Es kann die Produktverpackung nach dem Stand der Technik nur als Systemträger genutzt werden.

Die kommunikativen Wirkungen müssen durch aufwendige, von aussen wirkende Technik in Form von Schrift-, Bild- oder Zahlenreihen hergestellt werden.

Solche Systeme sind keine eigenständigen Systeme im Sinne autarker Einzel-Informationsübermittler ohne externe Hilfsmittel. Dieser Stand der Technik hat die Aufgabe der Erfindung und der Lösung nicht nahegelegt.

Es ist auch die Einzel-Informationsübermittlung als Glückwunschkarte bekannt. Es wird durch Aufklappen einer Kartenhälfte ein batteriebetriebener, vorprogrammierbarer Musikchip aktiviert.

Dabei wird eine bewegliche Lasche als Schaltfunktion benutzt um einen geschlossenen Stromkreislauf zwischen einer Knopfzellen-Batterie und dem Musikchip herzustellen.

Eine Verwendung dieser Technik für die Nutzung in Produktverpackungen, oder in deren Zuschnitten vor Bildung der Produktverpackungen, ist nicht möglich.

Die Größe der Bauteile und der Knopfzellen-Batterie lassen eine maschinelle Applikation in hoher Stückzahl und Durchlaufgeschwindigkeit nicht zu.

Es sind die Bauteile in dieser Auslegungsgrösse für selbstklebende, mittels Etikettiergerät applizierbare Etiketten mit einer maximal verarbeitbaren Materialstärke unter 2 mm nicht verwendbar.

Die Knopfzellen-Batterien sind durch die Höhenabmessungen und durch ihre starre, unflexible Formgebung für eine maschinelle Applikation ungeeignet. Es wäre kein störungsfreier Produkteinschub bei oder nach Bildung der Produktverpackung, mit diesen Bauteilen möglich.

Die technische Auslegung der Glückwunschkarten haben von der Aufgabe der Erfindung weggeführt.

Es haben nach diesem Stand der Technik maschinell herstellbare, während des Applikationsprozesses verknüpfbare Schaltauslegungen zwischen unterschiedlich ausgelegten Trage- und Öffnungsversionen von Produktverpackungen durch seine andere, konstruktive Ausbildung nicht nahegelegen.

Gegenstand der Erfindung sind Produktverpackungen mit autarken Informationssystemen auf Basis aktiver Smart Label-Etiketten mit unterbrochenen, stromführenden Verbindungen, die durch manuelle Einwirkung einen geschlossenen Stromkreislauf bilden und dadurch in beliebiger Ein- und Ausschaltfolge gespeicherte Daten abgeben, und deren konstruktive Ausbildung eine kontinuierliche Applikation in deren unterschiedlichen Zuschnittauslegungen, sowie einen störungsfreien Produkteinschub bei oder nach Bildung der Produktverpackungen gestatten.

Aufgabe der Erfindung sind Produktverpackungen mit applizierten, aktiven Smart Label-Etiketten herzustellen, diese durch manuelle Betätigung gespeicherter Informationen aller Art wiederholbar für Verbraucher abrufbar zu machen, und die in kontinuierlicher Produktionsfolge bei hohen Durchlaufzahlen zu erzielen sind.

Es ist eine weitere Aufgabe der Erfindung die konstruktive Auslegung aller funktionalen Teile des aktiven Smart Label-Etiketts so auszubilden, dass diese praktisch nicht erkennbar sind und die Zuführung von Produkten in die Produktverpackungen nicht behindern. Die Produktverpackungen mit Informationssystemen auf Datenträger zum Abruf gespeicherter Daten sind im Patentanspruch 1 definiert.

Die Unteransprüche beanspruchen alternative und bevorzugte Ausgestaltungen für eine optimale, störungsfreie Herstellung der Produktverpackungen der Erfindung.

Ein technischer Effekt der Produktverpackung der Erfindung liegt darin, dass durch die Kombination der konstruktiven Merkmale eine kontinuierliche Produktionsfolge mit hoher Durchlaufgeschwindigkeit und Stückzahlen über 15.000 pro Stunde bei der Fertigung der Produktverpackungen erzielt wird.

Dieser Effekt ist überraschend dadurch zu erreichen, dass die aktiven Smart Label als Etiketten in dünner Materialstärke, einschlleßlich der integrierten Energiequelle so ausgelegt sind, dass sie mit bekannten Etikettiergeräten vorab in die Zuschnitte der Produktverpackungen appliziert werden und dadurch die nachfolgende, kontinuierliche Produktionsfolge bei der Umhüllung von Produkten, dem Einschub oder der Befüllung bei Bildung der Produktverpackungen nicht beeinträchtigen.

Ein Vorteil der Erfindung besteht darin, dass die aktiven Smart Label als Etiketten so ausgelegt werden können, dass eine Wiederholung des Erstabrufes möglich ist und eine direkte Kommunikation zwischen Produkthersteller und Verbraucher mit dem werb der Produktverpackung erzielt wird.

Ein weiterer Vorteil besteht darin, dass die Produktverpackung, ausgerüstet mit Smart Label-Etiketten der Erfindung, einen effektiven Informationsträger darstellt und darin ein Einsparungspotenzial an bisher üblicher Verkaufspromotion liegt, und weil dem Verbraucher jederzeit eine nachvollziehbare Informationsquelle zur Verfügung steht.

Ein weiterer Vorteil besteht darin, dass keine externen Zusatzgeräte für den Abruf erforderlich sind.

Ein anderer Vorteil liegt darin, dass durch Mehrfachbenutzung der mit unterschiedlichen Informationen auslegbaren Smart Label-Etiketten nach der Produktentnahme ein Sammlereffekt angeregt wird, der den wirtschaftlichen Erfolg der Produktverpackung der Erfindung erhöht.

Es zeigen die Figuren:
- Fig. 1: Draufsicht auf eine beispielhafte Auslegung der aktiven Smart Label mit integrierter Energiequelle, Minus- und Pluspol, sowie der aufmontierten Datenträger und der Darstellung einer z.B. vom Minus- oder Pluspol ausgehenden stromleitenden Verbindung 7; 7a
- Fig. 2: Draufsicht auf den Zuschnitt einer Produktverpackung aus faltbaren Kartonmaterial mit Eingrifflaschen als Tragehilfe, sowie innenseitig aufgetragenem aktiven Smart Label entsprechend Fig. 1 und der vom Pluspol ausgehenden stromleitenden Verbindung 7; 7a, die an den geschlossenen Eingrifflaschen unterbrochen ist
- Fig. 2a: Perspektivansicht einer Produktverpackung und gebildet aus dem Zuschnitt Fig. 2 mit geschlossenen Eingrifflaschen und unterbrochener stromleitender Verbindung 7; 7a an den geschlossenen Eingriffslaschen
- Fig. 2b: Perspektivansicht Fig. 2a mit nach unten gefalteten Eingrifflaschen als Schaltvorrichtung und Schaltfunktion zur Herstellung einer geschlossenen stromleitenden Verbindung 7; 7a
- Fig. 3: Draufsicht auf eine alternative Produktverpackung und ausgebildet als Faltschachtel mit stirnseitig geschlossenen Öffnungslaschen, mit innenseitig aktiven Smart Label, gemäß Fig. 1, und Darstellung der Schaltvorrichtung und Schaltfunktion durch Öffnen einer stirnseitigen Öffnungslasche für die Produktentnahme.
- Fig. 4: Draufsicht auf eine weitere alternative Produktverpackung, ausgebildet als Faltschachtel mit Einschubteil sowie aktiven Smart Label gemäß Fig. 1, und Schaltvorrichtung und Schaltfunktion bei Beginn des Herausschiebens des Einschubteiles
- Fig. 5: Perspektivansicht einer weiteren Produktverpackung, ausgebildet als Faltschachtel mit Stülpdeckel mit einem aktiven Smart Label gemäß Fig. 1, sowie Schaltvorrichtung und Schaftfunktion durch Abheben des Stülpdeckels
- Fig. 6: Perspektivansicht einer Produktverpackung mit innenseitig eingebrachten Smart label gemäß Fig. 1, und alternativer Auslegung der Schaltvorrichtung und Schaltfunktion mittels Drucksensor zur Herstellung der geschlossenen stromleitenden Verbindung 7; 7a
- Fig. 7: Seitenansicht einer Druckmaschine zur Herstellung von Druckbilder auf Druckbogen mit Nutzeneinteilung für Zuschnitt-Produktverpackungen
- Fig. 8: Draufsicht auf Druckbogen mit Nutzeneinteilung für ZuschnittProduktverpackungen

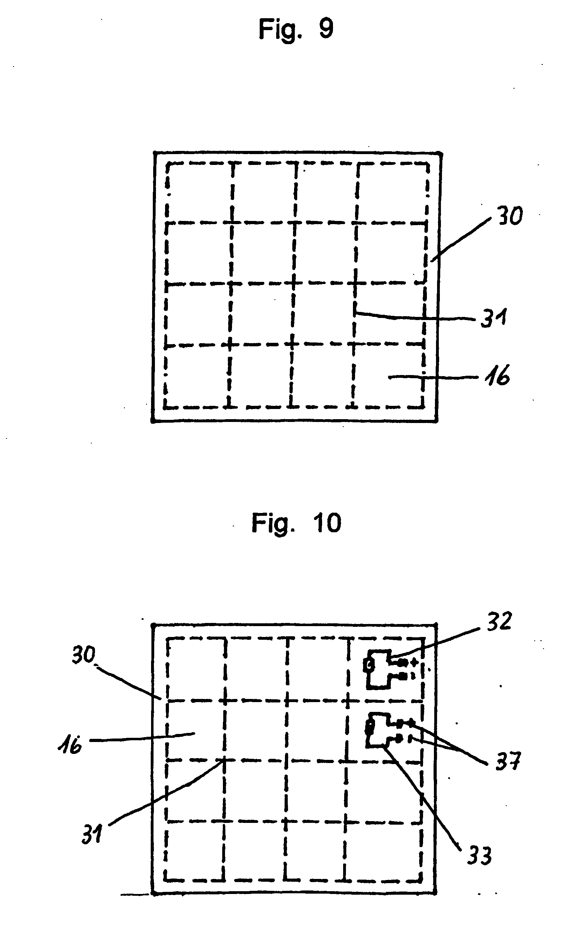

- Fig. 9: Draufsicht auf einen um 180 Grad gewendeten Druckbogen gemäß Fig. 8, mit Nutzeneinteilung entsprechend der mit Druckbildem versehenen Vorderseite der Druckbogen
- Fig. 10: Draufsicht auf Druckbild-Leiterbahnen entsprechend der Nutzeneinteilung gemäß Fig. 9

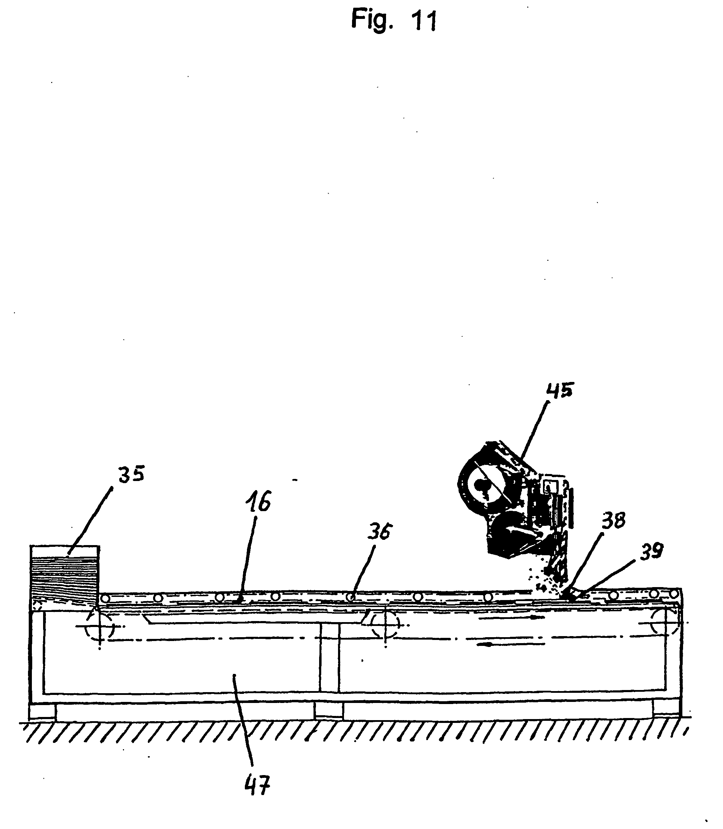

- Fig. 11: Seitenansicht einer Klebemaschine zur weiteren Verarbeitung der Zuschnitt-Produktverpackungen und Etikettiergerät

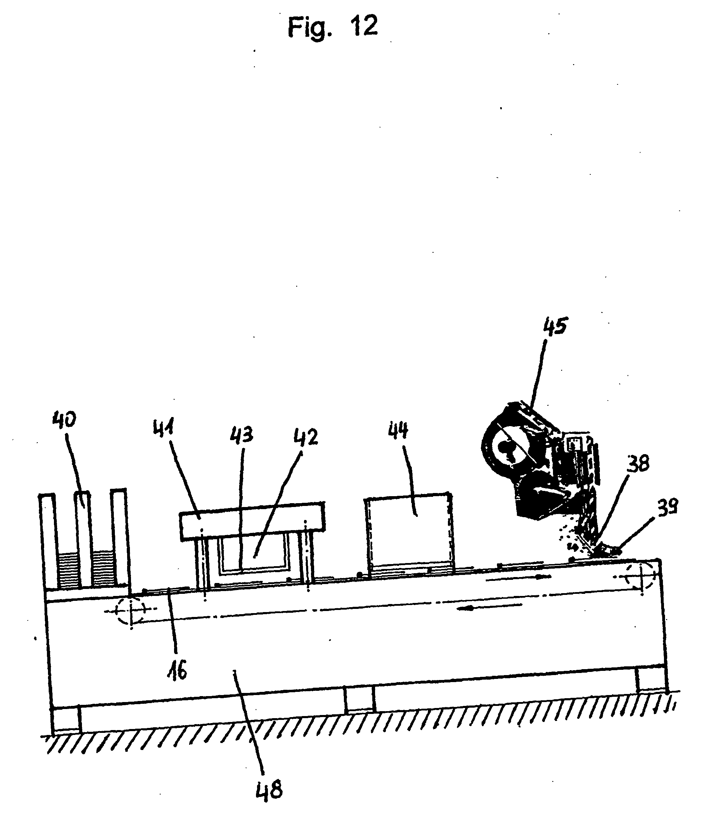

- Fig. 12: Seitenansicht Siebdruckmaschine mit Siebdruckwerk, UV_ Trocknung und Etikettiergerät

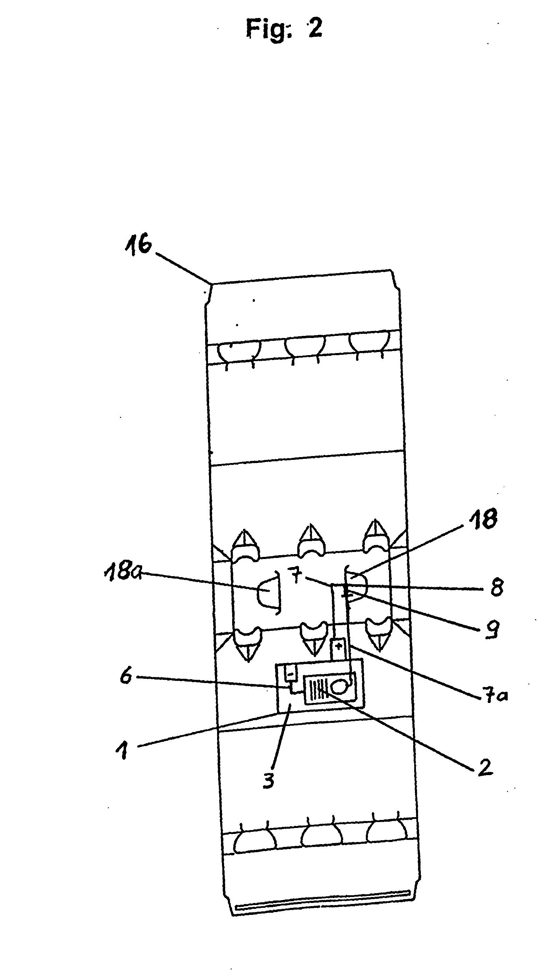

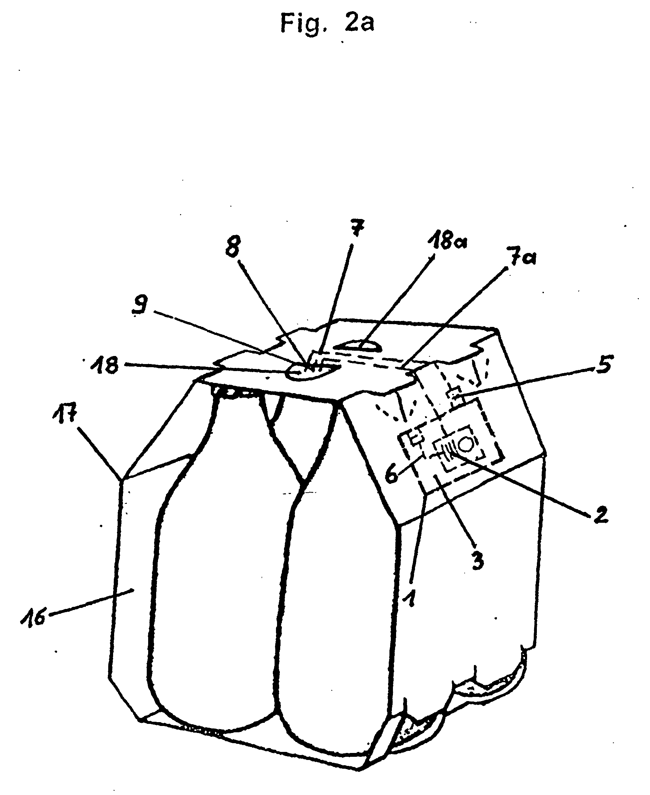

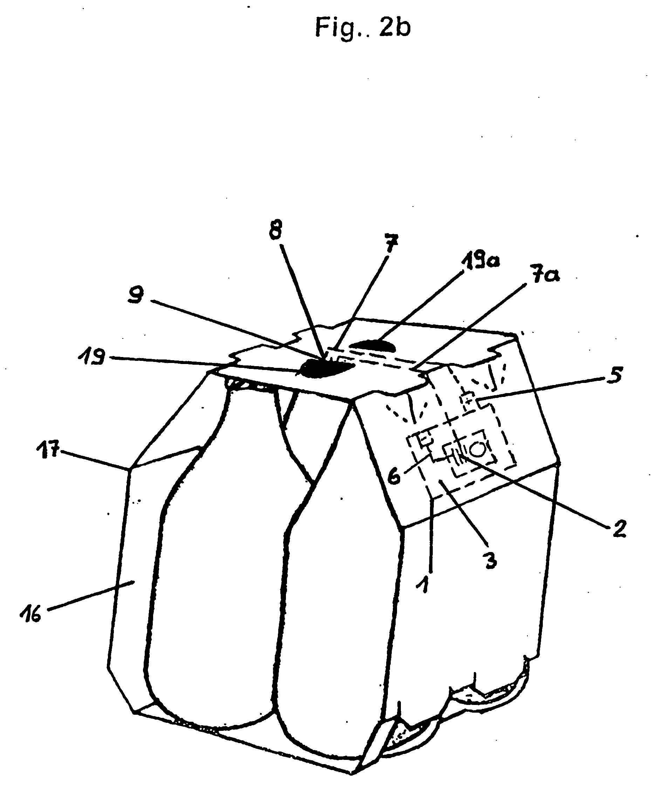

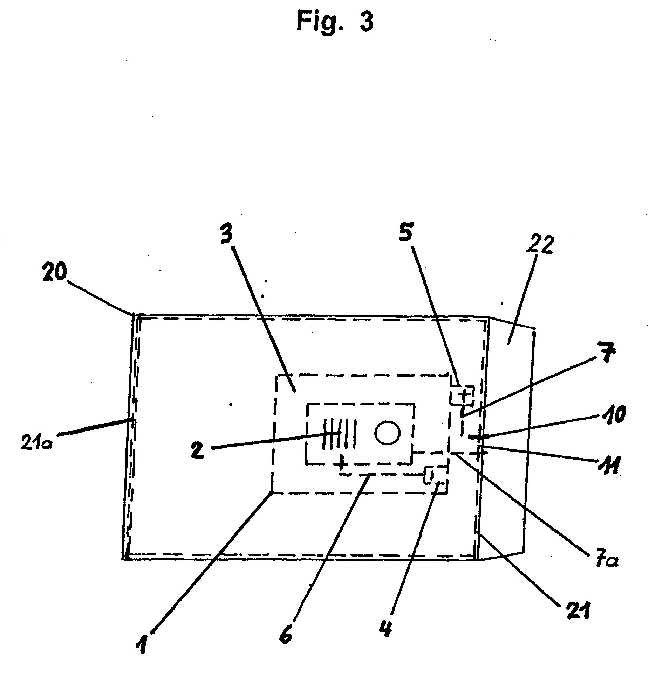

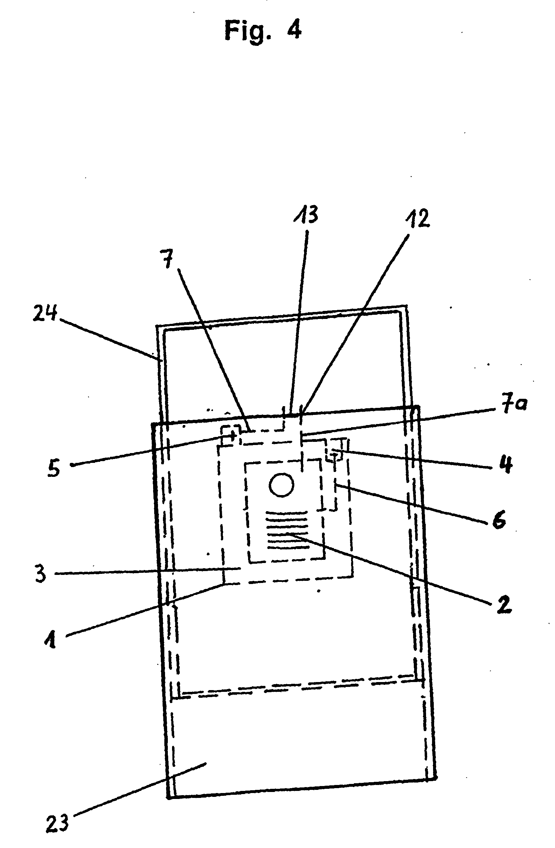

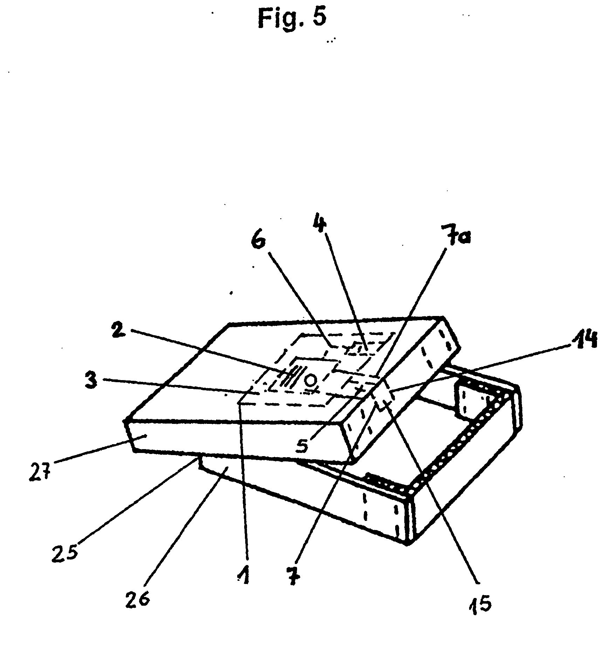

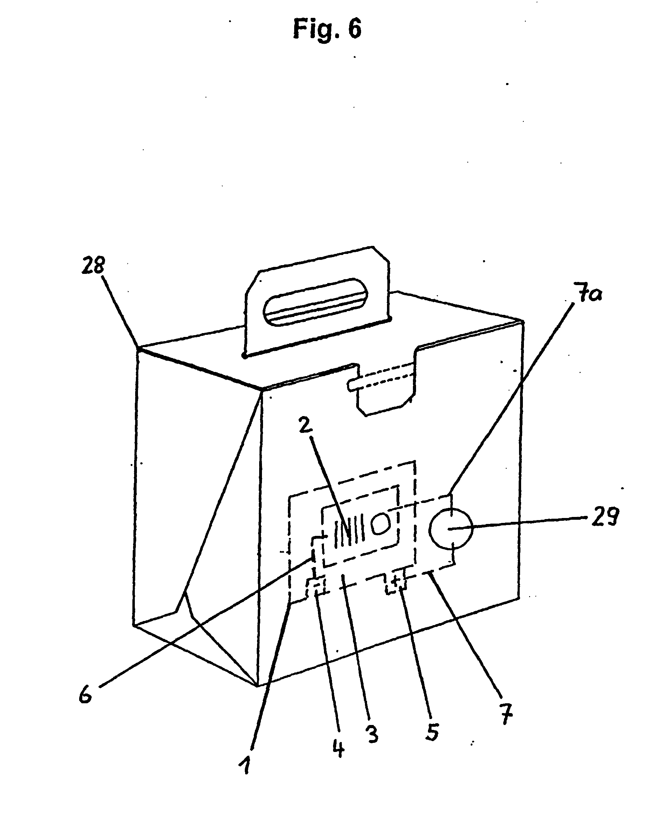

Es bedeuten die Ziffern in den Figuren:
- 1: aktive Smart Label- Etiketten
- 2: speicherprogrammierbare Datenträger
- 3: Integrierte Energiequelle
- 4: Minuspol
- 5: Pluspol
- 6: geschlossene stromführende Verbindung
- 7, 7a: unterbrochene stromführende Verbindung
- 8: überbrückende Schaltvorrichtung
- 9: trennende Schaltbrücke
- 10: überbrückende Kontaktvorrichtung
- 11: trennende Kontaktbrücke
- 12: überbrückende Zugvorrichtung
- 13: trennendes Teilstück
- 14: überbrückende Druckvorrichtung
- 15: trennende Druckbrücke
- 16: Zuschnitt-Produktverpackung (Fig. 2)
- 17: Produktverpackung (Fig. 2a; 2b)
- 18,18a: geschlossene Eingrifflaschen
- 19,19a: geöffnete Eingrifflaschen
- 20: Produktverpackung (Fig. 3)
- 21,21a: stimseitiger Verschluss
- 22: geöffneter stimseitiger Verschluss
- 23: Produktverpackung (Fig. 4)
- 24: geöffnetes Einschubteil
- 25: Produktverpackung (Fig. 5)
- 26: Bodenteil
- 27: Deckelteil
- 28: Produktverpackung (Fig. 6)
- 29: Drucksensor
- 30: Druckbogen
- 31: Nutzeneinteilung
- 32: Druckbild-Leiterbahnen
- 33: metallhaltige stromleitende Druckfarbe
- 34: Leiterbahnen-Druckmatritze
- 35: Magazin Klebemaschine
- 36: Transportvorrichtung
- 37: Minus- und Pluspolmarkierung
- 38: Spenderzunge
- 39: Andrucklasche
- 40: Zuführmagazin
- 41: Siebdruckwerk
- 42: Sieb-Siebdruckwerk
- 43: Siebdruckmatritze
- 44: UV-Trocknung
- 45: Etikettiergerät
- 46: Druckmaschine
- 47: Klebemaschine
- 48: Siebdruckmaschine

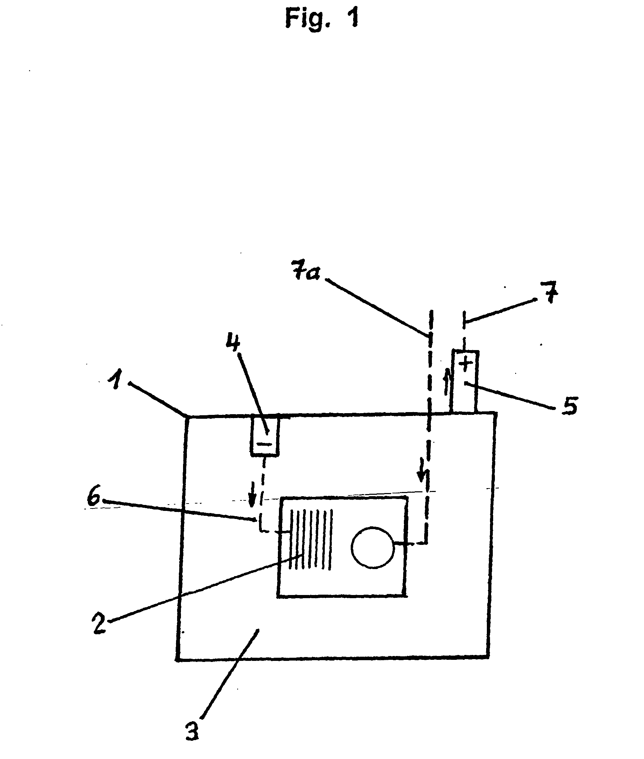

Beispiel 1:
   1. Aktives Smart Label 1, gemäß Fig. 1 mit aufmontierten speicherprogrammierbaren Datenträger 2 und integrierter Energiequelle 3, mit geschlossener stromleitender Verbindung 6 vom Minuspol 4 zum speicherprogrammierbaren Datenträger 2, sowie einen vorstehenden Pluspol 5 als Anschluss an eine unterbrochene stromleitende Verbindung 7;7a, wird selbstklebend auf dem Zuschnitt-Produktverpackung 16 so angeordnet, dass der Pluspol 5, des aktiven Smart Label 1, direkt auf eine vorab auf dem Zuschnitt-Produktverpackung 16, als stromleitendes Druckbild-Leiterbahnen 32 oder als geprägte, stromleitende Litze aufgebrachte unterbrochene Verbindung 7;7a fest haftend aufliegt, und die unterbrochene stromleitende Verbindung 7;7a dadurch gebildet wird, dass eine der geschlossenen Eingrifflaschen 18;18a des Zuschnitt-Produktverpackung 16, als überbrückende Schaltvorrichtung 8 ausgelegt ist, mit trennender Schaltbrücke 9 zwischen der an dieser Stelle unterbrochenen stromleitenden Verbindung 7;7a und die als stromleitendes Druckbild-Leiterbahn 32, oder als geprägte stromleitende Litze ausgebildete unterbrochene stromleitende Verbindung 7;7a, durch die trennende Schaltbrücke 9, auf eine der geschlossenen Eingrifflaschen 18;19a nicht durchgehend ist, und die unterbrochene stromleitende Verbindung 7;7a an der überbrückenden Schaltvorrichtung 8 durch die trennende Schaltbrücke 9 konstant erhalten bleibt, solange nicht durch manuelle Betätigung die geschlossenen Eingrifflaschen 18;18a um 90 Grad nach unten durchgedrückt als geöffnete Eingrifflaschen 19;19a ausgebildet werden, da die trennende Schaltbrücke 9, der überbrückenden Schaltvorrichtung 8 auf eine der geschlossenen Eingrifflaschen 18;18a keinen verbindenden Kontakt an der unterbrochenen stromleitenden Verbindung 7;7a im geschlossenen Zustand der Eingrifflaschen 18;18a zulässt, und die so ausgebildete unterbrochene stromleitende Verbindung 7;7a eine beabsichtigte Aktivierung des speicherprogrammierbaren Datenträger 2 des aktiven Smart Label 1, gezielt periodisch unterbricht.
      Die so vorbehandelten Zuschnitt-Produktverpackungen 16, gemäß Fig. 2 auf Verpackungsmaschinen zu Produktverpackungen 17, ge-Fig. 2a ausgebildet werden, und nach Herstellung der Produktverpackungen 17 die geschlossenen Eingrifflaschen 18; 18a, durch die trennende Schaltbrücke 9, der überbrückenden Schaltvorrichtung 8 auf eine der geschlossenen Eingrifflaschen 18; 18a, eine Aktivierung des speicherprogrammierbaren Datenträger 2 des aktiven Smart Label 1 in den Produktverpackungen 17 unterbindet, und dadurch die unterbrochene stromleitende Verbindung 7; 7a erhalten bleibt.
Beispiel 2:
   2. Die Produktverpackung 17, gemäß Fig. 2b mit um 90 Grad nach unten durchgedrückten Eingrifflaschen 19; 19a in Ausbildung zum Transport der Produktverpackung 17, wodurch die trennende Schaltbrücke 9, der überbrückenden Schaltvorrichtung 8 auf einer der Eingrifflaschen 18; 18a, die unterbrochene stromleitende Verbindung 7; 7a, zwischen den Pluspol 5 und dem speicherprogrammierbaren Datenträger 2 des aktiven Smart Label 1 kurzzeitig im Bereich der überbrückenden Schaltvorrichtung 8 schliesst, und die unterbrochene stromleitende Verbindung 7; 7a in eine geschlossene stromleitende Verbindung 6 ausgebildet wird, wodurch eine Aktivierung des speicherprogrammierbaren Datenträger 2 bewirkt wird, was den Abruf der gespeicherten Daten des Datenträger 2 auslöst, wobei durch Mehrfachbetätigung der Eingrifflaschen 18; 18a, die trennende Schaltbrücke 9 im Bereich der Schaltvorrichtung 8 auf den Eingrifflaschen 18; 18a, eine nachfolgende, wiederholbare geschlossene stromleitende Verbindung 6 kurzzeitig herstellt, und somit der Abruf der gespeicherten Daten des speicherprogrammierbaren Datenträger 2, beliebig oder nach Bedarf wiederholbar ist.
Beispiel 3:
   3. Die Produktverpackung 20, gemäß Fig. 3 und ausgebildet als Faltschachtel mit stirnseitigen Laschenverschlüssen 21; 21a, mit innenseitig appliziertem aktiven Smart Label 1 und in der Auslegung sowie Anordnung wie in der Zuschnitt-Produktverpackung 16, gemäß Fig. 2 dargestellt, und vom vorstehenden Pluspol 5 mit Anschluss an eine als stromleitendes Druckbild-Leiterbahnen (32) oder geprägte, stromleitende Litze in die Produktverpackung 20 eingebrachte unterbrochene stromleitende Verbindung 7; 7a, und die unterbrochene stromleitende Verbindung 7; 7a dadurch gebildet wird, das einer der stirnseitigen Verschlüsse 21; 21a der Produktverpackung 20 als überbrückende Kontaktvorrichtung 10 ausgelegt ist, mit trennender Kontaktbrücke 11 zwischen der an dieser Stelle unterbrochenen stromleitenden Verbindung 7; 7a, und beim Öffnen einer der stirnseitigen Verschlüsse 21; 21a bei Produktentnahme, der geöffnete stimseitige Verschluss 22 die überbrückende Kontaktvorrichtung 10, in Kombination mit der trennenden Kontaktbrücke 11 eine kurzzeitig geschlossene stromleitende Verbindung 6, im Bereich der unterbrochenen stromleitenden Verbindung 7; 7a herstellt, und dadurch eine Aktivierung des speicherprogrammierbaren Datenträger 2 des aktiven Smart Label 1 bewirkt wird, was den Abruf der gespeicherten Daten des speicherprogrammierbaren Datenträger 2 in der Produktverpackung 20 auslöst.
Beispiel 4:
   4. Produktverpackung 23, gemäß Fig. 4 und ausgebildet als Faltschachtel mit Einschubteil 24, mit innenseitig applizierten aktiven Smart Label 1, und in der Auslegung sowie Anordnung wie in der Zuschnitt-Produktverpackung 16, gemäß Fig. 2 dargestellt, und vom vorstehenden Pluspol 5 mit Anschluss an eine als stromleitendes Druckbild-Leiterbahnen 32 oder geprägte, stromleitende Litze in die Produktverpackung 23 eingebrachte unterbrochene stromleitenden Verbindung 7; 7a, und die unterbrochene stromleitende Verbindung 7; 7a dadurch gebildet wird, das eine überbrückende Kontaktvorrichtung 10 zwischen der unterbrochenen stromleitenden Verbindung 7; 7a ausgebildet ist, mittennender Kontaktbrücke 11, und das geöffnete Einschubteil 24 durch das Herausschieben aus der Produktverpackung 23, die trennende Kontaktbrücke 11 eine kurzzeitig geschlossene stromleitende Verbindung 6 im Bereich der unterbrochenen stromleitenden Verbindung 7; 7a hersteltt, wodurch eine Aktivierung des speicherprogrammierbaren Datenträger 2 des aktiven Smart Label 1 bewirkt wird, und der Abruf der gespeicherten Daten des speicherprogrammierbaren Datenträger 2 ausgelöst wird.
Beispiel 5:
   5. Produktverpackung 25, gemäß Fig. 5 und ausgebildet als Faltschachtel bestehend aus Bodenteil 26 und Deckelteil 27, mit in Bodenteil 26 oder Deckelteil 27 innenseitig applizierten aktiven Smart Label 1, und in der Auslegung und Anordnung wie in der Zuschnitt-Produktverpackung 16, gemäß Fig. 2 dargestellt, und vom vorstehenden Pluspol 5 mit Anschluss an eine als stromleitendes Druckbild-Leiterbahnen 32 oder geprägte, stromleitende Litze in das Deckelteil 27 eingebrachte unterbrochene stromleitende Verbindung 7; 7a, und die unterbrochene stromleitende Verbindung 7; 7a dadurch gebildet wird, das eine überbrückende Druckvorrichtung 14 zwischen der unterbrochenen stromleitenden Verbindung 7; 7a ausgebildet ist, mit trennender Druckbrücke 15, und beim Abheben des Deckelteiles 27 vom Bodenteil 28, die trennende Druckbrücke 15 der überbrückenden Druckvorrichtung 14, eine kurzzeitig geschlossene stromleitende Verbindung 6 im Bereich der unterbrochenen stromleitenden Verbindung 7; 7a herstellt, wodurch eine Aktivierung des speicherprogrammierbaren Datenträger 2 des aktiven Smart Label 1 bewirkt wird, und der Abruf der gespeicherten Daten des speicherprogrammierbaren Datenträger 2 ausgelöst wird, und durch erneutes Schließen und Abheben des Deckelteiles 27 vom Bodenteil 26 dieser Vorgang wiederholbar ist.
Beispiel 6:
   6. Produktverpackung 28, gemäß Fig. 6 mit innenseitig applizierten ak-tiven Smart Label 1, und in der Auslegung sowie Anordnung wie in der Zuschnitt-Produktverpackung 16, gemäß Fig. 2 dargestellt, und vom vorstehenden Pluspol 5 mit Anschluss an eine als stromleitendes Druckbild-Leiterbahnen 32 oder geprägte, stromleitende Litze in die Produktverpackung 28 eingebrachte unterbrochene stromleitende Verbindung 7; 7a, und die unterbrochene stromleitende Verbindung 7; 7a dadurch gebildet wird, das ein Drucksensor 29 zwischen der unterbrochenen stromleitenden Verbindung 7; 7a eingebracht ist, und durch manuelle Betätigung des Drucksensors 29 eine kurzzeitig geschlossene Verbindung 6 im Bereich der unterbrochenen stromleitenden Verbindung 7; 7a hergestellt wird, wodurch der Abruf der gespeicherten Daten des speicherprogrammierbaren Datenträger 2, des aktiven Smart Label 1 ausgelöst wird.

Die beispielsweise maschinelle Herstellung von Produktverpackungen mit Informationssystemen auf Datenträger der Erfindung wird wie folgt beschrieben:

Ausgehend von dem nach dem Stand der Technilk bekannten Verfahrensstufen zur Herstellung von Produktverpackungen, werden Druckbogen aus Kartonmaterial mittels bekannter Druckmaschinen im Offset-, Flexo-, Tief- oder Siebdruckverfahren auf der Druckseite einseitig mit einem Druckbild versehen, wodurch sich je nach Größenauslegung der herzustellenden Produktverpackungen eine variierende Anzahl von Druckbildem auf dem Druckbogen zu einer sog. Nutzeneinteilung ausbilden, und die so ausgebildeten Druckbogen nachfolgend auf bekannten Stanzmaschinen mittels Stanzformen in der Auslegung der Nutzeneinteilung und Druckbildem in variierender Anzahl, als Zu schnitt-Produktverpackungen (Fig. 2) durch den Stanzvorgang hergestellt werden, und die so vereinzelt ausgebildeten Zuschnitt-Produktverpackungen auf bekannten Verpackungsmaschinen bei Produktherstellern zu z.B. Produktverpackungen (Fig. 2a, 3, 4, 5, 6) ausgebildet werden.

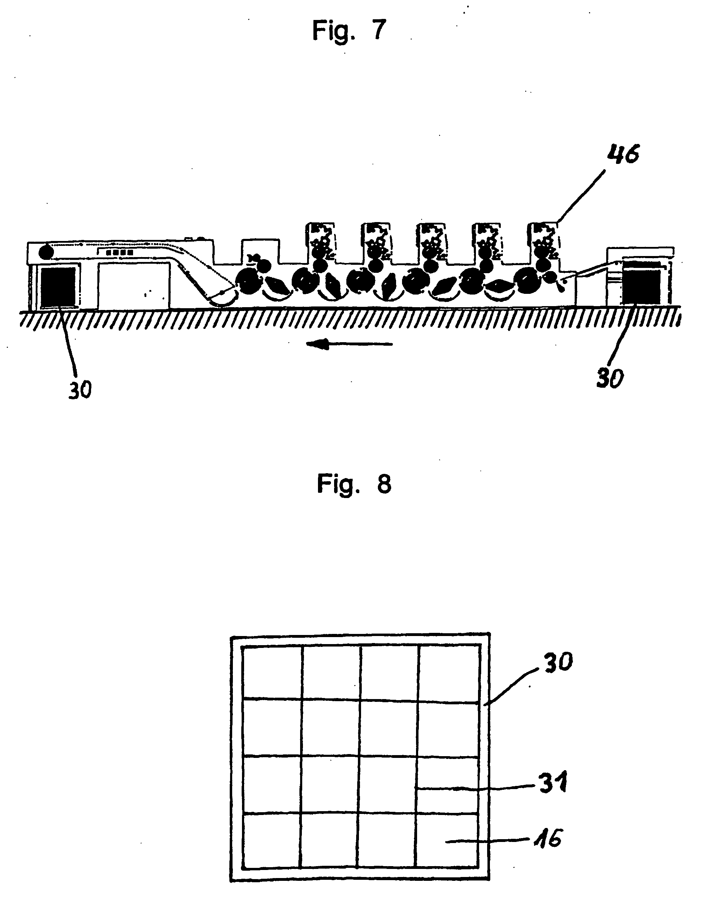

Bei der beispielsweise maschinellen Herstellung der Produktverpackungen mit Informationssystemen auf Datenträger der Erfindung, wird der aussenseitig mit Druckbild versehene Druckbogen (30) mit Nutzeneinteilung (31) um 180 Grad gedreht und läuft in einem zweiten Arbeitsgang durch die Druckmaschine Fig. 7, sodass die Druckbogen (30) innenseitig mit einem weiteren Druckbild-Leiterbahnen (32), als geschlossene stromführende Verbindungen (6) oder unterbrochene stromführende Verbindungen (7, 7a) versehen werden können, und das innenseitige Druckbild-Leiterbahnen (31) aus metallhaltiger, stromleitender Druckfarbe (33) besteht, wobei das innenseitige Druckbild-Leiterbahnen (31) zugleich die Lage der vorgegebenen Abstände Minuspol (4) und Pluspol (5) für den späteren Auftrag der aktiven Smart Label (1) mit integrierten Energiequelle (3) ausbildet, und die in Beispiel 1 - 6 dargestellte überbrückende Schaltvorrichtung (8) mit trennender Schaltbrücke (9) der Fig. 2b bis Drucksensor (29) der Fig. 6 herstellt, und die Herstellung mittels auswechselbarer Leiterbahnen-Druckmatritzen (34) erfolgt, wodurch die jeweilige Anpassung der Leiterbahnen-Druckmatritzen (34) an die unterschiedlichen Auslegungen der Beispiele 1 - 6 der Fig. 2 bis Fig. 6 gegeben ist, und nachfolgend die so vorbehandelten Druckbogen (30) auf den bekannten Stanzmaschinen zu den unterschiedlichen Zuschnitt-Produktverpackungen (16) vereinzelt werden, und die vereinzelten Zuschnitt-Produktverpackungen (16) in das Magazin (35) von bekannten Klebemaschinen (47) eingelegt werden, mittels Friktions- oder gleichwertiger Abzugsvorrichtungen vereinzelt, durch Transportvorrichtung (36) durch die Klebemaschine (47) geführt werden, um unterschiedliche Auffalt- und Klebevorgänge für die erforderliche Endfertigung der z.B. Zuschnitt-Produktverpackung (16) vorzunehmen bevor eine Auslieferung an den Produkthersteller erfolgt, und die Klebemaschine (47) mit einem modifiziertem Etikettiergerät (45) am Auslauf höhen- und seitenverstellbar ausgerüstet ist, womit die einseitig selbklebend ausgestatteten aktiven Smart Label (1) mit integrierter Energiequelle (3) passergenau so auf die innenseitig mit dem Druckbild Leiterbahnen (31) vorbehandelten Zuschnitt-Produktverpackung (16) appliziert werden, dass der ausgebildete Minuspol (4) und zugleich der Pluspol (5) des aktiven Smart Label (1) deckungsgleich auf das innenseitige Druckbild-Leiterbahnen (31) aus metallhakiger, stromleitender Druckfarbe (33) und seiner ebenfalls ausgebildten Minus- und Pluspolmarkierungen (37) zu liegen kommt, und die Spenderzunge (38) des Etikettiergerätes (45) mit einer Andrucklasche (39) ausgestattet ist, und dadurch eine feste stromführende Verbindung zwischen den Minus- und Pluspolmarkierungen (37) der Zuschnitt-Produktverpackung (16) und dem Minus- und Pluspol (4; 5) der integrierten Energiequelle (3) des applizierten aktiven Smart Label (1) hergestellt ist, die so vorgefertigten Zuschnitt-Produktverpackungen (16) wegen der dünnen Materialstärke der aktiven Smart Label (1) mit integrierter Energiequelle (3) nach Verlassen der Klebemaschine (47) übereinanderliegend auf Paletten oder in Umkartons gestapelt bzw. eingelegt werden können, ohne das dadurch beim Transport zum Produkthersteller Verformungen oder andere, von aussen einwirkende Druck- bzw. Zugkräfte, die gewollte unterbrochene stromführende Verbindung (7: 7a), zwischen der überbrückenden Schaltvorrichtung (8) und der zugeordneten trennenden Schaltbrücke brücke (9) der Zuschnitt-Produktverpackung (16) bzw. der in den Fig. 3 bis Fig. 6 nachrangig dargestellten Ausbildungen der Zuschnitt-Produktverpackungen so beschädigt, dass eine Auslösung des Abrufes der gespeicherten Daten unbeabsichtigt während des Transports eintreten kann, der gleiche technische Effekt bei Verarbeitung der Zuschnitt-Produktverpackungen (16) auf den Verpackungsmaschinen bei Bildung der Produktverpackungen der Fig. 2b bis Fig. 6 bewirkt wird und dadurch sichergestellt ist, dass erst durch gezielte manuelle Betätigung auf z.B. die geschlossenen Eingrifflaschen (18; 18a) der Fig. 2a um 90 Grad nach unten, die geöffneten Eingrifflaschen (19; 19a) der Fig. 2b durch Kunden in den Verkaufsstellen hergestellt werden muss, um die unterbrochene stromführende Verbindung (7; 7a) in eine geschlossene stromführende Verbindung (6), mittels der überbrückenden Schaltvorrichtung (8) mit trennender Schaltbrücke (9), zu überführen und erst dadurch der Abruf der gespeicherten Daten des speicherprogrammierbaren Datenträger (2) des aktiven Smart Label (1) hergestellt werden kann.

Eine alternative, vom dargestellten Herstellungsprozess abweichende Produktionsfolge bei der Ausbildung des innenseitigen Druckbildes-Leiterbahnen (32) aus metallhaltiger, stromleitender Druckfarbe (33) auf Zuschnitt-Produktverpackungen (16) bzw. der unterschiedlichen Auslegungen und aufgezeigt in den Beispielen 2 - 6 der Fig. 2 bis Fig. 6 besteht darin, dass die auf den bekannten Druckmaschinen (46) zu verarbeitenden Druckbögen aus faltbaren Kartonmaterial nur auf der Druckseite einseitig mit Druckbildem in der bekannten Nutzeneinteilung (31) bedruckt werden, und nachfolgend auf den ebenfalls bekannten Stanzmaschinen mittels Stanzformen zu Zuschnitt-Produktverpackungen (16) oder den dargestellten anderen Auslegungsformen der Fig. 2 bis Fig. 6 vereinzelt werden.

Danach die vereinzelten Zuschnitt-Produktverpackungen (16) in das Zuführmagazin (40) von bekannten Siebdruckmaschinen (48) so eingelegt werden, dass die nicht bedruckte Innenseite der Zuschnitt-Produktverpackungen (16) nach oben zeigend mittels Abzugs- und Transportband, Einzeln und hintereinander versetzt, in getakteter Produktionsfolge unter ein Siebdruckwerk (41) transportiert werden, und das Sieb (42) des Siebdruckwerkes (41) als Siebdruck-Matritze (43) in Form der erforderlichen Leiterbahnen (32) ausgebildet ist, und die geschlossenen stromführenden Verbindungen (7; 7a) sowie die unterbrochenen stromführenden Verbindungen (6) mit der überbrücken-Schaltvorrichtung (8) und trennender Schaltbrücke (9) als Druckbild (32) auf die Innenseiten der Zuschnitt-Produktverpackungen (16) überträgt, und eine nachgeschaltete UV-Trocknung (44) das sofortige Aushärten des Druckbildes-Leriterbahnen (32) bewirkt, sodass ein am Auslauf der Siebdruckmaschine (48) montiertes Etikettiergerät (45) die einseitig selbstklebend ausgestatteten aktiven Smart Label (1) mit integrierter Energiequelle (3) passergenau so auf die innenseitig mit dem Druckbild-Leiterbahnen (32) vorbehandelten Zuschnitt-Produktverpackungen (16) appliziert, dass der ausgebildete Minuspol (4) und zugleich der Pluspol (5) des aktiven Smart Label (1) deckungsgleich auf das innenseitige Druckbild-Leiterbahnen (32) aus metallhaltiger, stromleitender Druckfarbe (33) und seiner ebenfalls ausgebildeten Minus- und Pluspolmarkierungen (37) zu liegen kommt, und mittels einer an der Spenderzunge (38) des Etikettiergerätes (45) angebrachten Andrucklasche (39) eine feste, sromführende Verbindung zwischen den Minus- und Pluspolmarkierungen (37) der Zuschnitt-Produktverpackung (16) und dem Minus- und Pluspol (4; 5) der integrierten Energiequelle (3) des applizierten aktiven Smart Label (1) hergestellt ist und die so vorgefertigten Zuschnitt-Produktverpackungen (16) der Weiterverarbeitung, bis zur Bildung der unterschiedlichen Auslegungen von Produktverpackungen der Fig. 2a, 3, 4, 5 und Fig. 6, in der zuvor bereits beschriebenen Transport- und Handlingsabfolge, zugeführt werden, wobei unter aktives Smart Label (1) immer aktives Smart Label als Etikett zu verstehen ist.

## Patentansprüche

1. Produktverpackungen unterschiedlicher Auslegungsform und Größe,die aus ein- oder mehrteiligen Zuschnitten (16) aus faltbarem Karton- oder Folienmaterial hergestellt sind, Trage-, Öffnungs- und Wiederverschlussvorrichtungen (18, 19) für Transport und Produktentnahme aufweisen und nach maschineller Herstellung durch maschinelle Applikation mittels Etikettiergerät innenseitig mit selbstklebenden, autarken und programmierbaren aktiven Smart Label-Etiketten (1) mit integrierter Dünnschicht-Energiequelle (3) und in dünner Materialstärke, vorzugsweise unter 2 mm versehen worden sind, **dadurch gekennzeichnet, daß** eine vom Plus- oder Minuspol (4, 5) der aktiven Smart Label-Etiketten (1) ausgehende, stromführende Verbindung (7, 7a) in unmittelbarer Nähe von zugeordneten Trage-, Öffnungs- und Wiederverschlussvorrichtungen (18, 19) oder eines Drucksensors (29) unterbrochen ist, wobei die stromführende Verbindung (7, 7a) vorab oder gemeinsam während der Applikation der aktiven Smart Label-Etiketten (1) als metallisiertes, stromleitendes Druckbild hergestellt wird und die Herstellung der Verbindung von Produktverpackung und aktive Smart Label-Etiketten in kontinuierlicher Produktionsfolge mit hoher Durchlaufgeschwindigkeit und Stückzahlen, vorzugsweise über 15.000 pro Stunde erfolgt, und daß die unterbrochene stromführende Verbindung (7, 7a) so lange besteht, bis durch eine von aussen einwirkende Betätigung auf die Trage-, Öffnungs- und Wiederverschlussvorrichtungen (18, 19) oder den Drucksensor (29) an diesen Stellen mittels überbrückender Schaltvorrichtung (9, 13) ein geschlossener Stromkreislauf hergestellt wird und dadurch die gespeicherten Daten des aktiven Smart Label-Etiketts (1) abgerufen werden.

2. Produktverpackungen nach Anspruch 1, **dadurch gekennzeichnet, dass** ein aktives Smart Label-Etikett (1) mit integrierter Energiequelle (3) und speicherprogrammierbaren Datenträger (2), sowie vorstehenden Pluspol (5) selbstklebend aufgetragen ist, und der vorstehende Pluspol (5) beim Auftrag einen fest haftenden Kontakt mit der unterbrochenen, stromleitenden Verbindung (7,7a) eingeht, dadurch eine geschlossene stromleitende Verbindung (6) von der integrierten Energiequelle (3) zur unterbrochenen stromleitenden Verbindung (7,7a) bewirkt wird, und durch die unterbrochene stromführende Verbindung (7,7a) eine durchgehend geschlossene strom leitende Verbindung (6), zum speicherprogrammierbaren Datenträger (2), des aktiven Smart Label-Etiketts (1), zwischen den unterbrochenen stromleitenden Verbindungen (7) und (7a) nicht hergestellt ist, und damit ein Abruf der Daten vom speicherprogrammierbaren Datenträger (2) nicht ausgelöst werden kann, und das eine überbrückende Schaltvorrichtung (8), mit trennender Schaltbrücke (9) auf einer der geschlossenen Eingrifflaschen (18,18a), zwischen der unterbrochenen stromleitenden Verbindung (7) und (7a), angeordnet ist, und die trennende Schaltbrücke (9) auf eine der geschlossenen Eingrifflaschen (18,18a), die unterbrochene stromleitende Verbindung (7,7a) herstellt, und eine geschlossene stromleitende Verbindung (6) dadurch bewirkt wird, dass durch Herunterdrücken einer der Eingrifflaschen (18,18a), mit darauf angeordneter trennender Schaltbrücke (9), um 90 Grad und mehr, geöffnete Eingrifflaschen (19,19a) ausgebildet werden, und dabei die trennende Schaltbrücke (9) die unterbrochene stromleitende Verbindung zwischen (7) und (7a) überbrückt, und durch die hergestellte geschlossene stromleitende Verbindung (6), zwischen dem Pluspol (5) und dem speicherprogrammierbaren Datenträger (2), des aktiven Smart Label-Etiketts (1) der Abruf der Daten des speicherprogrammierbaren Datenträger (2) ausgelöst wird.

3. Produktverpackung nach Anspruch 1, **dadurch ge** **kennzeichnet, dass** eine überbrückende Kontaktvorrichtung (10), mit trennender Kontaktbrücke (11) auf stirnseitige Verschlüsse (21,21a), zwischen der unterbrochenen stromleitenden Verbindung (7) und (7a) angeordnet ist, und die trennende Kontaktbrücke (11) auf den stirnseitigen Verschlüssen (21,21 a), die unterbrochene stromleitende Verbindung (7, 7a) herstellt, und eine geschlossene stromleitende Verbindung (6) dadurch bewirkt wird, dass durch Herunterfalten der stirnseitigen Verschlüsse (21, 21a) um 90 Grad ein geöffneter strinseitiger Verschluss (22) ausgebildet wird, und dabei die trennende Kontaktbrücke (11) die unterbrochene stromleitende Verbindung zwischen (7) und (7a) überbrückt, und durch die hergestellte geschlossene stromleitende Verbindung (6), zwischen dem Pluspol (5) und dem speicherprogrammierbaren Datenträger (2), des aktiven Smart Label-Etiketts (1), der Abruf der Daten des speicherprogrammierbaren Datenträger (2) ausgelöst wird.

4. Produktverpackung nach Anspruch 1 **dadurch gekennzeichnet, dass** eine überbrückende Zugvorrichtung (12), mit trennendem Teilstück (13), auf ein geöffnetes Einschubteil (24) angeordnet ist, und die unterbrochene stromleitende Verbindung (7, 7a) auf der Produktverpackung ausgebildet ist, das geöffnete Einschubteil (24), mit trennendem Teilstück (13), beim öffnenden Herausschieben aus der Produktverpackung, die unterbroche stromleitende Verbindung zwischen (7) und (7a) überbrückt, und dadurch eine geschlossene stromleitende Verbindung (6), zwischen dem Pluspol (5) und dem speicherprogrammierbaren Datenträger (2), des aktiven Smart Label-Etiketts (1) herstellt, und der Abruf der Daten des speicherprogrammierbaren Datenträger (2) ausgelöst wird.

5. Produktverpackung nach Anspruch 1, **dadurch gekennzeichnet, dass** eine überbrückende Druckvorrichtung (14), mit trennender Druckbrücke (15) auf dem Deckelteil (27), zwischen der unterbrochenen stromleitenden Verbindung (7) und (7a) angeordnet ist, und die trennende Druckbrücke (15) die unterbrochene stromleitende Verbindung (7, 7a) herstellt, und eine geschlossene stromleitende Verbindung (6) dadurch bewirkt wird, das durch Abheben des Deckelteiles (27) vom Bodenteil (26), die trennende Druckbrücke (15) die unterbrochene stromleitende Verbindung zwischen (7) und (7a) überbrückt, und durch die hergestellte geschlossene Verbindung (6), zwischen dem Pluspol (5) und dem speicherprogrammierbaren Datenträger (2), des aktiven Smart Label-Etiketts (1), der Abruf der Daten des speicherprogrammierbaren Datenträger (2) ausgelöst wird.

6. Produktverpackung nach Anspruch 1, **dadurch gekennzeichnet, dass** der Drucksensor (29) zwischen der unterbrochenen stromleitenden Verbindung (7) und (7a) angeordnet ist und eine geschlossene stromleitende Verbindung (6) dadurch bewirkt wird, daß durch manuelle Betätigung ein Kontakt im Drucksensor (29) die unterbrochene stromleitende Verbindung zwischen (7) und (7a) schließt.

7. Produktverpackung nach den Ansprüchen 1 - 6, **dadurch gekennzeichnet, dass** die aktiven Smart Label-Etiketten (1) und die unterbrochene, stromleitende Verbindung (7, 7a), sowie die zur Herstellung der geschlossenen, stromleitenden Verbindung (6) erforderlichen Auslegungen, auf die Aussenseiten der Produktverpackungen aufgebracht werden.

8. Produktverpackung nach den Ansprüchen 1 - 7, **dadurch gekennzeichnet, dass** das aktive Smart Label-Etikett (1) mit speicherprogrammierbaren Datenträgern (2) so ausgestaltet ist, dass die gespeicherten Daten auf dem Datenträger (2) als Sprach-, Klang- und audio-visueller Sequenzen, oder einer Kombination derselben, hergestellt werden, und bei Abruf der Daten, unabhängig von externen Werbe- oder Marketingaktionen, direkte, auf den Inhält der Produktverpackung bezogene Informationen an den Verbraucher übermittelt werden können.

9. Verfaht en zur Herstellung von Produktverpackungen nach den Ansprüchen 1 - 8 bei welchem Druckbogen aus Kartonmaterial mittels Druckmaschinen im Offset-, Flexo-, Tief- oder Siebdruckverfahren auf der Druckseite einseitig mit einem Druckbild versehen werden und dadurch eine variierende Anzahl von Druckbildern auf dem Druckbogen zu einer Nutzeneinteilung ausgebildet werden, und diese Druckbogen auf Stanzmaschinen mittels Stanzformen in der Auslegung der Nutzeneinteilung der Druckbilder in variierender Anzahl als Zuschnitt-Produktverpackungen hergestellt werden, und diese vereinzelt ausgebildeten Zuschnitt-Produktverpackungen auf Verpackungsmaschinen zur Bildung von Produktverpackungen verarbeitet werden, **dadurch gekennzeichnet, dass** die maschinelle Herstellung der Produktverpackungen mit Informationssystemen auf speicherprogrammierbare Datenträger (2) erfolgt, wobei der einseitig mit Druckbild versehene Druckbogen (30) mit Nutzeneinteilung (31) um 180 Grad gedreht wird, und dieser danach in einem zweiten Arbeitsgang durch eine Druckmaschine (46) geführt wird, und die Druckbogen (30) nun innenseitig mit einem weiteren Druckbild-Leiterbahnen (32) passergenau abgestimmt auf das aussenseitige Druckbild mit Nutzeneinteilung (31), als geschlossenen stromführende Verbindung (6) oder unterbrochene stromführende Verbindung (7, 7a) versehen wird, und das innenseitige Druckbild-Leiterbahnen (32) aus metallhaltiger, stromleitender Druckfarbe (33) besteht, wobei das innenseitige Druckbild-Leiterbahnen (32) zugleich die Lage der vorgegebenen Abstände Minuspol (4) und Pluspol (5) für den späteren Auftrag der aktiven Smart Label (1) mit integrierter Energiequelle (3) ausbildet, und die überbrückende Schaltvorrichtung (8) mit trennender Schaltbrücke (9) bis Drucksensor (29) hergestellt ist und die Herstellung mittels auswechselbarer Leiterbahnen-Druckmatritzen (34) erfolgt, und danach die so vorbehandelten Druckbogen (30) auf Stanzmaschinen zu den unterschiedlichen Zuschnitt-Produktverpackungen (16) vereinzelt werden, und diese in das Magazin (35) von Klebemaschinen (47) eingelegt werden, dann mittels Friktions- oder gleichwertiger Abzugsvorrichtungen vereinzelt und durch Transportvorrichtung (36) durch eine Klebemaschine (47) geführt werden, und diese mit einem modifiziertem Etikettiergerät (45) am Auslauf höhen- und seitenverstellbar ausgerüstet ist und die einseitig selbstklebend ausgestatteten aktiven Smart Label (1) mit integrierter Energiequelle (3) passergenau so auf die innenseitig mit dem Druckbild-Leiterbahnen (32) vorbehandelten Zuschnitt-Produktverpackung (16) appliziert werden, derart dass der ausgebildete Minuspol (4) oder der Pluspol (5) der integrierten Energiequelle (3) des aktiven Smart Label (1) deckungsgleich auf das innenseitige Druckbild-Leiterbahnen (32) aus metallhaltiger, stromleitender Druckfarbe (33) und der ebenfalls ausgebildeten Minus- und Pluspolmarkierungen (37) liegt, und die Spenderzunge (38) des Etikettiergerätes (45) mit einer Andrucklasche (39) ausgestattet ist und dadurch eine feste, stromführende Verbindung zwischen den Minus- und Pluspolmarkierungen (37) der Zuschnitt-Produktverpackung (16) und dem Minus- oder Pluspol (4; 5) der integrierten Energiequelle (3) des applizierten aktiven Smart Label (1) hergestellt ist, und die vorgefertigten Zuschnitt-Produktverpackungen (16) mit dünnen Materialstärken der aktiven Smart Label (1) mit integrierter Energiequelle (3) nach Verlassen der Klebemaschine (47) übereinanderliegend auf Paletten oder in Umkartons gestapelt oder eingelegt werden und erst durch eine gezielte, manuelle Betätigung, wie das Herunterfalten der geschlossenen Eingrifflaschen (18; 18a) um 90 Grad nach unten mit Ausbildung zu geöffneten Eingrifflaschen (19; 19a) der Produktverpackungen (16) durch Benutzer, wie Kunden, insbesondere in Verkaufsstellen, beim Wegtragen oder Öffnen der Produktverpackungen (16) bewirkt wird, dass die unterbrochene, stromführende Verbindung (7; 7a) in eine geschlossene, stromführende Verbindung (6) mittels der überbrückenden Schaltvorrichtung (8) mit trennender Schaltbrücke (9) überführt wird und erst dadurch der Abruf der gespeicherten Daten des speicherprogrammierbaren Datenträger (2) des aktiven Smart Label (1) erfolgt.

10. Verfahren nach Anspruch 9, **dadurch gekennzeichnet, dass** bei der Ausbildung der innenseitigen Druckbild-Leiterbahnen (32) aus metallhaltiger, stromleitender Druckfarbe (33) auf Zuschnitt-Produktverpackungen (16) oder unterschiedlicher Auslegung, ein geänderter Herstellungsablauf darin besteht, dass die auf Druckmaschinen (46) zu verarbeitenden Druckbögen (30) aus faltbaren Kartonmaterial nur auf der Druckseite mit Druckbildem in Nutzeneinteilung (31) bedruckt werden und danach auf Stanzmaschinen mittels Stanzformen zu Zuschnitt-Produktverpackungen (16) oder anderen Auslegungsformen vereinzelt werden, danach die vereinzelten Zuschnitt-Produktverpackungen (16) in das Zuführmagazin (40) von Siebdruckmaschinen (48) so eingelegt werden, dass die nicht bedruckte Innenseite der Zuschnitt-Produktverpackungen (16) nach oben zeigend mittels Transportvorrichtung (36), einzeln und hintereinander versetzt, in getakteter Produktionsfolge unter ein Siebdruckwerk (41) transportiert werden und das Sieb-Siebdruckwerk (42) als Siebdruckmatritze (43), in Form der erforderlichen Druckbild-Leiterbahnen (32) ausgebildet ist und die geschlossenen, stromführenden Verbindungen (7; 7a) sowie die unterbrochenen, stromführenden Verbindungen (6) mit der überbrücktenden Schaltvorrichtung (8) und der trennenden Schaltbrücke (9) als Druckbild-Leiterbahnen (32) auf die Innenseiten der Zuschnitt-Produktverpackungen (16) übertragen, und eine nachgeschaltete UV-Trocknung (44) das sofortige Aushärten des Druckbild-Leiterbahnen (32) bewirkt und ein am Auslauf der Siebdruckmaschine (48) montiertes Etikettiergerät (45) die einseitig selbstklebend ausgestatteten aktiven Smart Label (1) mit integrierter Energiequelle (3) passergenau so auf die innenseitig mit dem Druckbild-Leiterbahnen (32) vorbehandelten Zuschnitt-Produktverpackungen (16) appliziert, derart dass der ausgebildete Minuspol (4) oder der Pluspol (5) des aktiven Smart Label (1) deckungsgleich auf das innenseitige Druckbild-Leiterbahnen (32) aus metallhaltiger, stromleitender Druckfarbe (33) und seiner ebenfalls ausgebildeten Minus- und Pluspolmarkierungen (37) liegt und mittels einer an der Spenderzunge (38) des Etikettiergerätes (45) angebrachten Andrucklasche (39) eine feste, stromführende Verbindung zwischen dem Minus- oder Pluspolmarkierungen (37) der Zuschnitt-Produktverpackung (16) und dem Minus- oder Pluspol (4; 5) der integrierten Energiequelle (3) des applizierten tiven Smart Label (1) hergestellt ist, und die vorgefertigten Zuschnitt-Produktverpackungen (16) der Weiterverarbeitung bis zur Bildung der unterschiedlichen Auslegungen der Produktverpackungen auf Verpackungsmaschinen, in Transport- und Handlingsabfolge zugeführt werden.

## Claims

1. Product packaging of different design form and size, which is produced from one- or multi-part blanks (16) made of foldable cardboard or film material, has carrying, opening and resealing devices (18, 19) for transport and product removal and, after mechanised production, has been provided internally, by mechanised application by means of a labelling device, with self-adhesive, self-sufficient and programmable active smart labels (1) having an integrated thin layer energy source (3) and having a thin material thickness, preferably below 2 mm, **characterised in that** a current-conducting connection (7, 7a), which starts from the positive or negative terminal (4, 5) of the active smart labels (1), is interrupted in the immediate vicinity of assigned carrying, opening and resealing devices (18, 19) or of a pressure sensor (29), the current-conducting connection (7, 7a) being produced in advance or jointly during application of the active smart labels (1) as metallised current-conducting printed image and the production of the connection of product packaging and active smart labels being effected in a continuous production sequence at high throughput speed and high piece numbers, preferably over 15,000 per hour, and **in that** the interrupted current-conducting connection (7, 7a) exists until a closed circuit is produced at these positions by means of a bridging switch (9, 13) due to externally effected actuation on the carrying, opening and resealing devices (18, 19) or on the pressure sensor (29) and, consequently, the stored data of the active smart label (1) are retrieved.

2. Product packaging according to claim 1, **characterised in that** an active smart label (1) with integrated energy source (3) and memory-programmable data carrier (2), and also a protruding positive terminal (5) is applied in a self-adhesive manner, and the protruding positive terminal (5), during application, forms a securely adhering contact with the interrupted current-conducting connection (7, 7a), consequently a closed current-conducting connection (6) is effected from the integrated energy source (3) to the interrupted current-conducting connection (7, 7a) and, due to the interrupted current-conducting connection (7, 7a), a continuously closed current-conducting connection (6), to the memory-programmable data carrier (2), of the active smart label (1) is not produced between the interrupted current-conducting connections (7) and (7a), and hence retrieval of the data from the memory-programmable data carrier (2) cannot be triggered, and **in that** a bridging switch (8), with separating bridge (9) on one of the closed holding tabs (18, 18a) is disposed between the interrupted current-conducting connection (7) and (7a), and the separating bridge (9) on one of the closed holding tabs (18, 18a) produces the interrupted current-conducting connection (7, 7a), and a closed current-conducting connection (6) is effected as a result of the fact that, by depressing one of the holding tabs (18, 18a), with the separating bridge (9) disposed thereon, by 90° and more, opened holding tabs (19, 19a) are formed, and the separating bridge (9) thereby bridges the interrupted current-conducting connection between (7) and (7a) and, due to the produced closed current-conducting connection (6), between the positive terminal (5) and the memory-programmable data carrier (2), of the active smart label (1), retrieval of the data of the memory-programmable data carrier (2) is triggered.

3. Product packaging according to claim 1, **characterised in that** a bridging contact device (10), with separating contact bridge (11) on end-side closures (21, 21a), is disposed between the interrupted current-conducting connection (7) and (7a), and the separating contact bridge (11) on the end-side closures (21, 21a) produces the interrupted current-conducting connection (7, 7a), and a closed current-conducting connection (6) is effected as a result of the fact that, due to folding down of the end-side closures (21, 21a) by 90°, an opened end-side closure (22) is formed, and the separating contact bridge (11) thereby bridges the interrupted current-conducting connection between (7) and (7a) and, due to the produced closed current-conducting connection (6), between the positive terminal (5) and the memory-programmable data carrier (2), of the active smart label (1), retrieval of the data of the memory-programmable data carrier (2) is triggered.

4. Product packaging according to claim 1, **characterised in that** a bridging pulling device (12), with separating partial piece (13), is disposed on an opened insertion part (24), and the interrupted current-conducting connection (7, 7a) is formed on the product packaging, the opened insertion part (24), with separating partial piece (13), when pushed out of and opening the product packaging, bridges the interrupted current-conducting connection between (7) and (7a), and consequently a closed current-conducting connection (6), between the positive terminal (5) and the memory-programmable data carrier (2), of the active smart label (1) is produced, and retrieval of the data of the memory-programmable data carrier (2) is triggered.

5. Product packaging according to claim 1, **characterised in that** a bridging pressure device (14), with separating pressure bridge (15) on the cover part (27), is disposed between the interrupted current-conducting connection (7) and (7a), and the separating pressure bridge (15) produces the interrupted current-conducting connection (7, 7a), and a closed current-conducting connection (6) is effected as a result of the fact that, by raising the cover part (27) from the base part (26), the separating pressure bridge (15) bridges the interrupted current-conducting connection between (7) and (7a) and, due to the produced closed connection (6), between the positive terminal (5) and the memory-programmable data carrier (2), of the active smart label (1), retrieval of the data of the memory-programmable data carrier (2) is triggered.

6. Product packaging according to claim 1, **characterised in that** the pressure sensor (29) is disposed between the interrupted current-conducting connection (7) and (7a), and a closed current-conducting connection (6) is effected as a result of the fact that, due to manual actuation, a contact in the pressure sensor (29) closes the interrupted current-conducting connection between (7) and (7a).

7. Product packaging according to claims 1 - 6, **characterised in that** the active smart labels (1) and the interrupted, current-conducting connection (7, 7a) and also the designs required to produce the closed current-conducting connection (6) are applied on the outsides of the product packaging.

8. Product packaging according to claims 1 - 7, **characterised in that** the active smart label (1) with memory-programmable data carriers (2) is configured such that the stored data on the data carrier (2) are produced as speech, sound and audiovisual sequences or a combination of the same and, upon retrieval of the data, independently of external advertising or marketing promotions, direct information relating to the contents of the product packaging can be conveyed to the consumer.

9. Method for producing product packaging according to claims 1 - 8, in which printed sheets made of cardboard material are provided on one side with a printed image by means of printing machines in offset, flexo, rotogravure or screen printing methods on the printed side and consequently a varying number of printed images is formed on the printed sheet to form a useful division, and these printed sheets are produced on stamping machines by means of stamping in the design of the useful division of the printed images in varying numbers as blank product packaging, and this individually formed blank product packaging is processed on packaging machines in order to form product packaging, **characterised in that** the mechanised production of the product packaging is effected with information systems on memory-programmable data carriers (2), the printed sheet (30) provided on one side with the printed image and with a useful division (31) is rotated by 180°, and the latter is thereafter guided through a printing machine (46) in a second operation, and the printed sheet (30) is now provided internally with a further printed image-conducting path (32), coordinated precisely to the external printed image with the useful division (31), as a closed current-conducting connection (6) or interrupted current-conducting connection (7, 7a), and the internal printed image-conducting path (32) comprises a metal-containing, current-conducting printing ink (33), the internal printed image-conducting path (32) simultaneously forming the position of the prescribed spacings of negative terminal (4) and positive terminal (5) for subsequent application of the active smart labels (1) with integrated energy source (3), and the bridging switch (8) with separating bridge (9) is produced up to the pressure sensor (29) and the production is effected by means of exchangeable conducting path printing stencils (34), and thereafter the thus pre-treated printed sheets (30) are separated on stamping machines into the various blank product packaging (16) and these are placed in the magazine (35) of gluing machines (47), then are separated by means of friction or equivalent discharge devices and are guided by a transport device (36) through a gluing machine (47), and this is equipped with a modifiable labelling device (45) which is vertically and laterally adjustable at the outlet and the active smart labels (1), which are made self-adhesive on one side, with integrated energy source (3), are thus applied precisely on the blank product packaging (16) which is pre-treated internally with the printed image-conducting path (32) in such a manner that the formed negative terminal (4) or the positive terminal (5) of the integrated energy source (3) of the active smart label (1) is situated congruently on the internal printed image-conducting path (32) made of a metal-containing, current-conducting printing ink (33) and of the likewise formed negative and positive terminal markings (37), and the dispenser tongue (38) of the labelling device (45) is provided with a pressure tab (39) and consequently a secure, current-conducting connection is produced between the negative and positive terminal markings (37) of the blank product packaging (16) and the negative or positive terminal (4; 5) of the integrated energy source (3) of the applied active smart label (1), and the pre-manufactured blank product packaging (16) having thin material thicknesses of the active smart labels (1) with integrated energy source (3) are stacked or placed on pallets or in wrappings one above the other after leaving the gluing machine (47), and only by specific manual actuation, such as folding down the closed holding tabs (18; 18a) by 90° downwardly thus forming opened holding tabs (19; 19a) of the product packaging (16) by users, such as customers, in particular in sales outlets, when taking away or opening the product packaging (16) is it effected that the interrupted, current-conducting connection (7; 7a) is transformed into a closed, current-conducting connection (6) by means of the bridging switch (8) with separating bridge (9), and only as a result thereof is the retrieval of the stored data of the memory-programmable data carrier (2) of the active smart label (1) effected.

10. Method according to claim 9, **characterised in that**, when forming the internal printed image-conducting paths (32) made of a metal-containing, current-conducting printing ink (33) on blank product packaging (16) or a different design, a modified production sequence resides in the fact that the printed sheets (30) to be processed on printing machines (46) and made of foldable cardboard material are printed only on the printed side with printed images in the useful division (31) and thereafter are separated on stamping machines by means of stamping to form blank product packaging (16) or other design forms, thereafter the separated blank product packaging (16) is placed in the supply magazine (40) of screen printing machines (48) such that the non-printed inside of the blank product packaging (16) is transported pointing upwardly by means of a transport device (36), offset individually and one behind the other, in a phased production sequence below a screen printing machine (41) and the screen printing machine (42) is configured as a screen printing stencil (43), in the form of the required printed image-conducting paths (32) and the closed, current-conducting connections (7; 7a) and the interrupted, current-conducting connections (6) with the bridging switch (8) and the separating bridge (9) as printed image-conducting paths (32) are transferred to the insides of the blank product packaging (16), and subsequent UV-drying (44) effects immediate hardening of the printed image-conducting path (32) and a labelling device (45), which is mounted at the outlet of the screen printing machine (48), thus applies the active smart labels (1), which are made self-adhesive on one side, with integrated energy source (3) precisely on the blank product packaging (16) which is pre-treated internally with the printed image-conducting path (32) in such a manner that the formed negative terminal (4) or the positive terminal (5) of the active smart label (1) is situated congruently on the internal printed image-conducting path (32) made of metal-containing, current-conducting printing ink (33) and its likewise formed negative and positive terminal markings (37) and, by means of a pressure tab (39) fitted on the dispenser tongue (38) of the labelling device (45), a secure, current-conducting connection is produced between the negative or positive terminal markings (37) of the blank product packaging (16) and the negative or positive terminal (4; 5) of the integrated energy source (3) of the applied active smart label (1), and the pre-manufactured blank product packaging (16) is supplied for further processing to form the different designs of the product packaging on packaging machines in a transport and handling sequence.

## Revendications

1. Emballages de produits de différentes formes de conception et taille, qui sont fabriqués à partir de découpes (16) en une ou plusieurs parties réalisées dans un matériau cartonné ou en feuille, présentent des dispositifs de portage, d'ouverture et de refermeture (18, 19) pour transporter et prélever le produit et qui ont été pourvus, après fabrication mécanique, par application mécanique au moyen d'un appareil à étiqueter, du côté intérieur d'étiquettes Smart Label actives (1) autocollantes, autonomes et programmables avec source d'énergie à couche mince intégrée (3) et de faible épaisseur de matériau, de préférence inférieure à 2 mm, **caractérisés par le fait qu'**une liaison conductrice (7, 7a) partant du pôle positif ou négatif (4) des étiquettes Smart Label actives (1) est interrompue à proximité immédiate de dispositifs de portage, d'ouverture et de refermeture (18, 19) associés ou d'un capteur de pression (29), la liaison conductrice (7, 7a) étant réalisée préalablement ou en commun pendant l'application des étiquettes Smart Label actives (1) sous forme d'image imprimée métallisée conductrice et l'établissement de la liaison entre emballage de produit et étiquettes Smart Label actives s'effectuant en cycle de production continu à grande vitesse de passage et nombres de pièces élevés, de préférence supérieur à 15 000 par heure, et que la liaison conductrice (7, 7a) reste interrompue jusqu'à ce que, par une manoeuvre agissant de l'extérieur sur les dispositifs de portage, d'ouverture et de refertneture (18, 19) ou le capteur de pression (29), on établisse un circuit fermé à ces endroits au moyen d'un dispositif de commutation de pontage (9, 13), entraînant ainsi l'appel des données enregistrées dans l'étiquette Smart Label active (1).

2. Emballages de produits selon la revendication 1, **caractérisés par le fait qu'**une étiquette Smart Label active (1) avec source d'énergie intégrée (3) et support de données à mémoire programmable (2) ainsi qu'avec pôle positif (5) saillant est appliquée de manière autocollante et que lors de l'application le pôle positif (5) saillant entre en contact fermement adhérent avec la liaison conductrice interrompue (7, 7a), créant une liaison conductrice fermée (6) entre la source d'énergie intégrée (3) et la liaison conductrice interrompue (7, 7a), et n'établissant pas, en raison de la liaison conductrice interrompue (7, 7a), un e liaison conductrice (6) fermée continue vers le support de données à mémoire programmable (2) de l'étiquette Smart Label active (1) entre les liaisons conductrices interrompues (7) et (7a), empêchant ainsi un appel des données du support de données à mémoire programmable (2), et qu'un dispositif de commutation de pontage (8) avec pont de commutation séparateur (9) est disposé sur une des languettes de prise (18, 18a) fermées entre les liaisons conductrices interrompues (7) et (7a), le pont de commutation séparateur (9) sur une des languettes de prise (18, 18a) établissant la liaison conductrice interrompue (7, 7a), et qu'une liaison conductrice fermée (6) est créée **par le fait qu'**en abaissant une des languettes de prise (18, 18a), sur laquelle est disposé le pont de commutation séparateur (9), on forme des languettes de prise (19, 19a) ouvertes de 90 degrés et plus, le pont de commutation séparateur (9) pontant à cette occasion la liaison conductrice interrompue entre (7) et (7a), et la liaison conductrice fermée (6) établie entre le pôle positif (5) et le support de données à mémoire programmable (2) de l'étiquette Smart Label active (1) déclenchant l'appel des données du support de données à mémoire programmable (2).

3. Emballage de produit selon la revendication 1, **caractérisé par le fait qu'**un dispositif de contact de pontage (10) avec pont de contact séparateur (11) est disposé sur des fermetures frontales (21, 21a) entre les liaisons conductrices interrompues (7) et (7a), le pont de contact séparateur (11) sur les fermetures frontales (21, 21a) établissant la liaison conductrice interrompue (7, 7a), et qu'une liaison conductrice fermée (6) est créée **par le fait qu'**en repliant les fermetures frontales (21, 21a) de 90 degrés on forme une fermeture frontale (22) ouverte, le pont de contact séparateur (11) pontant à cette occasion la liaison conductrice interrompue entre (7) et (7a), et la liaison conductrice fermée (6) établie entre le pôle positif (5) et le support de données à mémoire programmable (2) de l'étiquette Smart Label active (1) déclenchant l'appel des données du support de données à mémoire programmable (2).

4. Emballage de produit selon la revendication 1, **caractérisé par le fait qu'**un dispositif de traction de pontage (12) avec section séparatrice (13) est disposé sur une pièce insérable (24) ouverte, et la liaison conductrice interrompue (7) et (7a) formée sur l'emballage de produit, la pièce insérable (24) ouverte avec section séparatrice (13) pontant la liaison conductrice interrompue entre (7) et (7a) lors de sa sortie ouvrante de l'emballage de produit, établissant ainsi la liaison conductrice fermée (6) entre le pôle positif (5) et le support de données à mémoire programmable (2) de l'étiquette Smart Label active (1) et déclenchant l'appel des données du support de données à mémoire programmable (2).

5. Emballage de produit selon la revendication 1, **caractérisé par le fait qu'**un dispositif de pression de pontage (14) avec pont de pression séparateur (15) est disposé sur la pièce de couvercle (27) entre les liaisons conductrices interrompues (7) et (7a), le pont de pression séparateur (15) établissant la liaison conductrice interrompue (7, 7a), et qu'une liaison conductrice fermée (6) est créée **par le fait que** lorsque l'on soulève la pièce de couvercle (27) de la pièce de fond (26), le pont de pression séparateur (15) ponte la liaison conductrice interrompue entre (7) et (7a), et la liaison conductrice fermée (6) établie entre le pôle positif (5) et le support de données à mémoire programmable (2) de l'étiquette Smart Label active (1) déclenche l'appel des données du support de données à mémoire programmable (2).

6. Emballage de produit selon la revendication 1, **caractérisé par le fait que** le capteur de pression (29) est disposé entre les liaisons conductrices interrompues (7) et (7a) et qu'une liaison conductrice fermée (6) est créée **par le fait que** par une manoeuvre manuelle un contact dans le capteur de pression (29) ferme la liaison conductrice interrompue entre (7) et (7a).

7. Emballage de produit selon les revendications 1 à 6, **caractérisé par le fait que** les étiquettes Smart Label actives (1) et la liaison conductrice interrompue (7, 7a) ainsi que les dispositifs nécessaires pour l'établissement de la liaison conductrice fermée (6) sont appliqués sur les faces externes des emballages de produits.

8. Emballage de produit selon les revendications 1 à 7, **caractérisé par le fait que** l'étiquette Smart Label active (1) avec support de données à mémoire programmable (2) est conçue de telle manière que les données enregistrées sur le support de données (2) sont réalisées sous forme de séquences vocales, sonores et audiovisuelles, ou d'une combinaison des susdites, et que lors de l'appel des données, indépendamment d'actions publicitaires ou de marketing externes, il est possible de transmettre au consommateur des informations directes, relatives au contenu de l'emballage de produit.

9. Procédé de fabrication d'emballages de produits selon les revendications 1 à 8, dans lequel des feuilles d'impression en carton sont munies, au moyen de machines à imprimer par offset, flexographie, héliogravure ou sérigraphie, du seul côté impression d'une image imprimée et il est réuni ainsi un nombre variable d'images imprimées sur la feuille d'impression selon une division en poses ou flans, et réalisé à partir de ces feuilles d'impression, sur des machines à découper, au moyen de formes de découpage, en fonction de la division en poses ou flans des images imprimées un nombre variable d'emballages de produits découpés, et ces emballages de produits découpés individuels sont transformés sur des machines à fabriquer les emballages pour former des emballages de produits, **caractérisé par le fait que** la fabrication mécanique des emballages de produits s'effectue avec des systèmes d'information sur des supports de données à mémoire programmable (2), à l'occasion de quoi la feuille d'impression (30) avec division en poses ou flans (31) munie d'un côté de l'image imprimée est tournée de 180 degrés et ensuite guidée, dans une deuxième opération, à travers une machine à imprimer (46), et les feuilles d'impression (30) sont munies du côté intérieur d'une autre piste conductrice imprimée (32), ajustée en alignement précis sur l'image imprimée du côté extérieur avec division en poses ou flans (31), sous forme de liaison conductrice fermée (6) ou de liaison conductrice interrompue (7, 7a), et la piste conductrice imprimée (32) du côté intérieur est réalisée en encre d'imprimerie métallisée conductrice (33), à l'occasion de quoi la piste conductrice imprimée (32) du côté intérieur forme en même temps la position des distances définies entre pôle négatif (4) et pôle positif (5) pour l'application ultérieure de l'étiquette Smart Label active (1) avec source d'énergie intégrée (3), et le dispositif de commutation de pontage (8) avec pont de commutation séparateur (9) est réalisé jusqu'au capteur de pression (29) et la fabrication s'effectue au moyen de matrices d'impression de piste conductrice (34) interchangeables, et ensuite les feuilles d'impression (30) ainsi prétraitées sont séparées sur des machines à découper pour former les différents emballages de produits découpés (16) et ceux-ci sont insérés dans le magasin (35) de machines à coller (47), puis séparés au moyen de dispositifs d'extraction à friction ou analogues et guidés par un dispositif de transport (36) à travers une machine à coller (47), équipée d'un appareil à étiqueter (45) modifié, réglable en hauteur et en décentrement latéral, et les étiquettes Smart Label actives (1) avec source d'énergie intégrée (3) sont appliquées en alignement précis sur l'emballage de produit découpé (16) prétraité avec la piste conductrice imprimée (32) du côté intérieur de telle manière que le pôle négatif (4) ou le pôle positif (5) de la source d'énergie intégrée (3) de l'étiquette Smart Label active (1) formé soit en coïncidence avec la piste conductrice imprimée (32) du côté intérieur en encre d'imprimerie métallisée conductrice (33) et les repères de pôles négatif et positif (37) également formés, et la lame distributrice (38) de l'appareil à étiqueter (45) est équipée d'une languette de pression (39) et il est établi de ce fait une liaison conductrice fixe entre les repères de pôles négatif et positif (37) de l'emballage de produit découpé (16) et le pôle négatif ou positif (4 ; 5) de la source d'énergie intégrée (3) de l'étiquette Smart Label active (1) appliquée, et les emballages de produits découpés (16) préfabriqués avec de faibles épaisseurs de matériau de l'étiquette Smart Label active (1) avec source d'énergie intégrée (3) sont empilés sur des palettes ou mis en place dans des cartons d'emballage à la sortie de la machine à imprimer (47) et c'est seulement par une manoeuvre manuelle précise, comme le pliage des languettes de prise fermées (18, 18a) de 90 degrés vers le bas avec formation de languettes de prise ouvertes (19, 19a) des emballages de produits par l'utilisateur, par exemple le client, en particulier aux points de vente, lors du transport ou de l'ouverture des emballages de produits (16), que la liaison conductrice interrompue (7, 7a) est transformée en une liaison conductrice fermée (6) au moyen du dispositif de commutation de pontage (8) avec pont de commutation séparateur (9) et que l'appel des données enregistrées dans le support de données à mémoire programmable (2) de l'étiquette Smart Label active (1) a lieu.

10. Procédé selon la revendication 9, **caractérisé par le fait que** lors de la formation de la piste conductrice imprimée (32) du côté intérieur en encre d'imprimerie métallisée conductrice (33) sur des emballages de produits découpés (16) ou de conception différente, un processus de fabrication modifié consiste en ce que les feuilles d'impression (30) en carton pliable à traiter sur les machines à imprimer (46) ne sont imprimées avec des images selon une division en poses que du côté impression et ensuite séparées en emballages de produits découpés (16) ou autres formes de conception sur des machines à découper au moyen de formes de découpage, puis les emballages de produits découpés (16) séparés sont insérés dans le magasin d'alimentation (40) de machines à imprimer par sérigraphie (48) de telle manière que le côté intérieur non imprimé des emballages de produits découpés (16) est transporté, dirigé vers le haut, individuellement et l'un derrière l'autre dans un cycle de production cadencé, sous un groupe d'impression par sérigraphie (41) au moyen d'un dispositif de transport (36), et l'écran (42) du groupe d'impression par sérigraphie est constitué d'une matrice d'impression (43) sous la forme de la piste conductrice imprimée (32) nécessaire et les liaisons conductrices interrompues (7, 7a) ainsi que les liaisons conductrices fermées (6) avec le dispositif de commutation de pontage (8) et le pont de commutation séparateur (9) sont transférées sous forme de piste conductrice imprimée (32) sur le côté intérieur des emballages de produits découpés (16), et un séchage à rayons UV (44) placé en aval provoque le durcissement immédiat de la piste conductrice imprimée (32) et un appareil à étiqueter (45) monté à la sortie de la machine à imprimer par sérigraphie (48) applique l'étiquette Smart Label active (1) avec source d'énergie intégrée (3), autocollante d'un côté, en alignement précis sur les emballages de produits découpés (16) prétraités du côté intérieur avec la piste conductrice imprimée (32) de telle manière que le pôle négatif (4) ou le pôle positif (5) de l'étiquette Smart Label active (1) formé soit en coïncidence avec la piste conductrice imprimée (32) du côté intérieur en encre d'imprimerie métallisée conductrice (33) et ses repères de pôles négatif et positif (37) également formés, et il est établi au moyen d'une languette de pression (39) montée sur la lame distributrice (38) de l'appareil à étiqueter (45) une liaison conductrice fixe entre les repères de pôles négatif et positif (37) de l'emballage de produit découpé (16) et le pôle négatif ou positif (4 ; 5) de la source d'énergie intégrée (3) de l'étiquette Smart Label active (1) appliquée, et les emballages de produits découpés (16) préfabriqués sont amenés par une succession de transport et de manutention au traitement ultérieur jusqu'à la formation des différentes conceptions des emballages de produits sur des machines à fabriquer les emballages.
